# EUROPEAN PATENT APPLICATION

(11) **EP 3 113 457 A1**
(43) Date of publication of application: **04.01.2017**
(21) Application number: 14883705.7
(22) Date of filing: 22.07.2014
(51) Int. Cl.: H04L 29/12

(54) **IPV6 ADDRESS PROCESSING METHOD AND DEVICE, AND DHCPV6 RELAY APPARATUS**

(30) Priority: 28.02.2014 CN 201410073262
(71) Applicant: ZTE Corporation, Shenzhen, Guangdong 518057 (CN)
(72) Inventor: WANG, Cui, Shenzhen Guangdong Province 518057 (CN); MENG, Wei, Shenzhen Guangdong 518057 (CN)
(74) Representative: Novagraaf Technologies
(86) International application number: PCT/CN2014/082755
(87) International publication number: WO 2015/127750

(57) **Abstract**

Provided are a method and device for processing an Internet Protocol version 6 (IPv6) address, Dynamic Host Configuration Protocol for IPv6 (DHCPv6) relay equipment and a DHCPv6 server. The method includes that: an Internet Protocol version 4 (IPv4) information option, of which an address field is an IPv4 address, in information options of an IPv6 message is monitored; an IPv6 prefix corresponding to the IPv4 information option is acquired; and an IPv6 address is synthesized according to the IPv4 address in the IPv4 information option and the IPv6 prefix. Through the present disclosure, various problems appearing when a server is still deployed in an IPv4 network in an IPv6/IPv4 network interworking process and the problem of complexity in network maintenance in the related art are solved, and the effects of automatically synthesizing the IPv6 address by virtue of network equipment, reducing complexity in system maintenance and enhancing convenience for transition from IPv4 to IPv6 are further achieved.

## Description

### Technical Field

The present disclosure relates to the field of communication, and in particular to a method and device for processing an Internet Protocol version 6 (IPv6) address, Dynamic Host Configuration Protocol for IPv6 (DHCPv6) relay equipment and a DHCPv6 server.

### Background

At present, NAT in a related art belongs to a Wide Area Network (WAN) access technology, is a translation technology for translating a private (reserved) address into a legal Internet Protocol (IP) address, and is widely applied to various types of Internet access manners and various types of networks. NAT can solve the problem of IP address depletion.

Along with depletion of Internet Protocol version 4 (IPv4) address resources and progressive deployment of Internet Protocol version 6 (IPv6) networks, existence of large-scale IPv4 networks and new IPv6 networks in networks makes it urgent for an operator to solve problems about mutual visit of various IPv6 networks and IPv4 networks during coexistence of IPv6/IPv4. A NAT64 technology and a Domain Name System 64 (DNS64) technology are practical technologies for solving the problems about the mutual visit of IPv6 and IPv4 in such a scenario.

Technical principles of NAT64 and DNS64 will be simply introduced below.

NAT64 is a stateful technology for transmitting a network address and a protocol, and usually merely supports an IPv6 network-side user to initiate to connect and access to an IPv4-side network resource. However, NAT64 also supports manual configuration of a static mapping relationship for active initiation of connection and access of an IPv4 network to an IPv6 network. NAT64 may implements IPv6 and IPv4 network address and protocol translation under a Transmission Control Protocol (TCP), a User Datagram Protocol (UDP) and an Internet Control Message Protocol (ICMP).

DNS64 mainly supports work of NAT64, and mainly synthesizes record A (IPv4 address) in DNS query information into record AAAA (IPv6 address) and returns synthesized record AAAA to an IPv6-side user. Synthesis of record AAAA is implemented by pre-configuring an IPv6 prefix (called pref64::/n for short) used for synthesizing IPv6 address on DNS64.

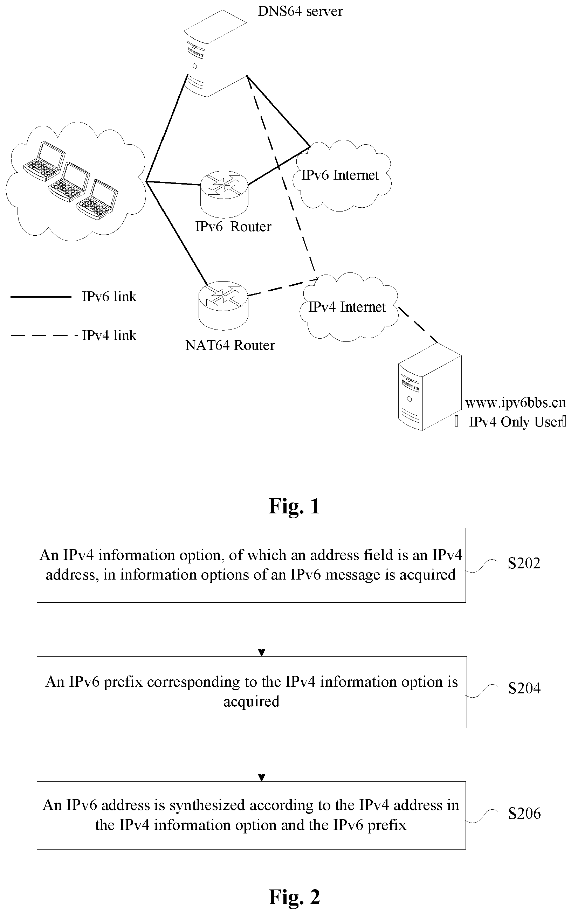

Networking of a common application scenario of NAT64 and DNS64 is as shown in Fig. 1.

In Fig. 1, a DNS64 server and a NAT64 router are completely independent parts, wherein 64:FF9B::/96 is a known prefix of DNS 64 pref64::/n, DNS64 usually defaults to use the prefix for synthesis from an IPv4 address to an IPv6 address, the prefix is also employed as a translation prefix of NAT64, and NAT64 translation is performed merely after traffic matched with the prefix is implemented. In DNS64 and NAT64, the prefix is usually represented as pref64::/n, wherein pref64 identifies a NAT64 prefix configured to synthesize the IPv6 address, n identifies a length of the NAT64 prefix, and besides adopting the known prefix, the prefix may be flexibly configured according to a practical network condition during network deployment. The length of the prefix supports: a range of 32, 40, 48, 56, 64, 96 or the like, and translation rules for prefixes with different lengths are not completely the same.

In Fig. 1, when an IPv6 only user initiates connection to access to an ordinary IPv6 website, traffic may be matched with a default IPv6 route to be directly forwarded to an IPv6 router for processing. When the IPv6 only user initiates connection to access to an IPv4 single-protocol stack server, the IPv6 only user is impossible to acquire IPv6 address information corresponding to an address of a destination IPv4 server, and sends a DNS request to the DNS64 server to find that the IPv4 server corresponds to an IPv4 address, i.e. record A, and then the DNS64 server is required to perform prefix synthesis, namely to synthesize record A and pref64::/n into record AAAA, and return the record AAAA to the IPv6 only user. Traffic of a pref64::/n network segment is routed and forwarded to the NAT64 router, thereby implementing IPv6 and IPv4 address and protocol translation to access to a resource in an IPv4 network.

In Fig. 1, DNS64 is required to cooperatively work with NAT64, a DHCPv6 server is required to issue the IPv6 address of the DNS64 server; in a scenario where no DNS64 is deployed in the network and the DNS is still located in an IPv4 network, NAT64 may not independently implement IPv6/IPv4 mutual visit. On one hand, client equipment may not acquire the IPv6 address corresponding to the DNS server, and furthermore, even though the client equipment acquires the IPv6 address corresponding to the DNS server, the client equipment may still not acquire record AAAA corresponding to the destination IPv4 server, so that a corresponding technical solution is required to solve the problem of the scenario under the condition of independent work of NAT64.

At present, there is a technical solution of acquiring pref64::/n of NAT64 in a Port Control Protocol (PCP) manner: draft-ietf-pcp-nat64-prefix64-04, and in the draft, PREFIX64 Option is added by extending a PCP to enable a PCP client to acquire information such as pref64::/n, an IPv6 suffix and an IPv4 prefix list from a NAT64-controlled PCP server; and however, such a technical solution requires a user and NAT64 equipment to enable the PCP, the PCP is not widely applied to networks, and under the condition that a Personal Computer (PC) is employed as a PCP client. The PC is required to upgrade an operating system to support the PCP. Obviously, the technical solution is wider in coverage and more difficult to carry out.

Furthermore, in Fig. 1, the DNS64 server may be configured to cooperatively work with NAT64 to solve the problem of the scenario where the original DNS server is still deployed in the IPv4 network; however, an existing IPv4 network further, besides the DNS server, correspondingly includes: a log server, a Cookie server, a resource location server, a strategy filtering server and the like, and parameters of these servers are all issued to IPv4 client equipment through a DHCPv4 option; and furthermore, for how IPv6-only client equipment acquires each network parameter in an IPv4 network, there is no universal technical solution to enable the IPv6-only client equipment to acquire IPv6 addresses of each IPv4 server.

A DHCPv6 is designed to process the allocation of an IPv6 address, an IPv6 prefix and other network information to client equipment, wherein the other network information includes information of a DNS server, a log server, a Cookie server, a resource location server, a strategy server and the like. In a scenario where the other network information servers are deployed in an IPv4 network, a corresponding IPv6 prefix is required to synthesize an IPv6 address corresponding to a corresponding IPv4 server, wherein the IPv6 prefixes may be the same, and may also be different, and these IPv6 prefixes are collectively referred to as synthesis IPv6 prefixes.

Therefore, in the related art, there exist various problems appearing when some servers are still deployed in an IPv4 network in an IPv6/IPv5 network interworking process and problems of network configuration regulation inflexibility and complexity in network maintenance when NAT64 services are upgraded or all upgraded to an IPv6 network in a later period.

### Summary

The present disclosure provides a method and device for processing an IPv6 address, DHCPv6 relay equipment and a DHCPv6 server, so as to at least solve various problems appearing when some servers are still deployed in an IPv4 network in an IPv6/IPv5 network interworking process and problems of network configuration regulation inflexibility and complexity in network maintenance when NAT64 services are upgraded or all upgraded to an IPv6 network in a later period.

According to one aspect of the present disclosure, a method for processing an Internet Protocol version 6 (IPv6) address is provided, including: acquiring an Internet Protocol version 4 (IPv4) information option, of which an address field is an IPv4 address, in information options of an IPv6 message; acquiring an IPv6 prefix corresponding to the IPv4 information option; and synthesizing an IPv6 address according to the IPv4 address in the IPv4 information option and the IPv6 prefix.

In an example embodiment, the IPv6 message includes at least one of: a Dynamic Host Configuration Protocol for IPv6 (DHCPv6) relay-reply message sent by a DHCPv6 server and generated to give a reply to DHCPv6 relay equipment; and a DHCPv6 reply message sent by a DHCPv6 server and configured to directly give a reply to client equipment.

In an example embodiment, wherein the IPv4 information option, of which the address field is the IPv4 address, in the information options of the IPv6 message includes at least one of: a multiplexed IPv6 option in a DHCPv6 message, wherein the multiplexed IPv6 option contains the IPv4 address; and an extended DHCPv6 message option, wherein the extended DHCPv6 message option contains the IPv4 address.

In an example embodiment, acquiring the IPv6 prefix corresponding to the IPv4 information option includes at least one of: acquiring the IPv6 prefix corresponding to the IPv4 information option from local configuration information of network equipment which synthesizes the IPv6 address; and acquiring the IPv6 prefix from a server which stores the IPv6 prefix.

In an example embodiment, after synthesizing the IPv6 address according to the IPv4 address in the IPv4 information option and the IPv6 prefix, further including: generating an IPv6 message containing an IPv6 address information option according to the synthesized IPv6 address; and sending the generated IPv6 message to client equipment.

According to another embodiment of the present disclosure, a device for processing an Internet Protocol version 6 (IPv6) address is provided, including: a first acquisition component, configured to acquire an Internet Protocol version 4, IPv4, information option, of which an address field is an IPv4 address, in information options of an IPv6 message; a second acquisition component, configured to acquire an IPv6 prefix corresponding to the IPv4 information option; and a first synthesis component, configured to synthesize an IPv6 address according to the IPv4 address in the IPv4 information option and the IPv6 prefix.

In an example embodiment, the second acquisition component includes at least one of: a first acquisition element, configured to acquire the IPv6 prefix corresponding to the IPv4 information option from local configuration information of network equipment which synthesizes the IPv6 address; and a second acquisition element, configured to acquire the IPv6 prefix from a server which stores the IPv6 prefix.

In an example embodiment, the device further including: a first generation component, configured to generate an IPv6 message containing an IPv6 address information option according to the synthesized IPv6 address; and a first sending component, configured to send the generated IPv6 message to client equipment.

According to another embodiment of the present disclosure, DHCPv6 relay equipment is provided, which may include the device mentioned in any item.

According to another embodiment of the present disclosure, a DHCPv6 server is provided, which may include the device mentioned in any item.

According to the present disclosure, an IPv4 information option, of which an address field is an IPv4 address, in information options of an IPv6 message is monitored; an IPv6 prefix corresponding to the IPv4 information option is acquired; and an IPv6 address is synthesized according to the IPv4 address in the IPv4 information option and the acquired IPv6 prefix. Therefore, various problems appearing when some servers are still deployed in the IPv4 network in the IPv6/IPv4 network interworking process and problems of network configuration regulation inflexibility and complexity in network maintenance when the NAT64 services are upgraded or all upgraded to the IPv6 network in the later period are solved, and the effects of automatically synthesizing the IPv6 address by virtue of the network equipment, reducing complexity in system maintenance and enhancing convenience for transition from IPv4 to IPv6 are further achieved.

### Brief Description of the Drawings

The drawings described here are adopted to provide further understanding of the present disclosure, and form a part of the present disclosure. Schematic embodiments of the present disclosure and descriptions thereof are adopted to explain the present disclosure and not intended to form improper limits to the present disclosure. In the drawings:
Fig. 1 is a diagram of a common application scenario of NAT64 and DNS64 according to a related art;
Fig. 2 is a flowchart of a method for processing an IPv6 address according to an embodiment of the present disclosure;
Fig. 3 is a structure block diagram of a device for processing an IPv6 address according to an embodiment of the present disclosure;
Fig. 4 is an example structure block diagram of the acquisition component 34 in the device for processing an IPv6 address according to an embodiment of the present disclosure;
Fig. 5 is an example structure block diagram of the device for processing the IPv6 address according to an embodiment of the present disclosure;
Fig. 6 is a structure block diagram of DHCPv6 relay equipment according to an embodiment of the present disclosure;
Fig. 7 is a structure block diagram of a DHCPv6 server according to an embodiment of the present disclosure
Fig. 8 is a structure block diagram of a device for synthesizing an IPv6 address according to an embodiment of the present disclosure;
Fig. 9 is a first example structure block diagram of a device for synthesizing an IPv6 address according to an embodiment of the present disclosure;
Fig. 10 is a second example structure block diagram according to a device for synthesizing an IPv6 address according to an embodiment of the present disclosure;
Fig. 11 is a structure block diagram of a system for synthesizing an IPv6 address according to an embodiment of the present disclosure;
Fig. 12 is a flowchart of a method for synthesizing an IPv6 address according to an embodiment of the present disclosure;
Fig. 13 is a diagram of a message format of a DHCPv6 message containing a new IPv4 network server address option according to an example embodiment of the present disclosure;
Fig. 14 is a diagram of a system for synthesizing an IPv6 address according to an example embodiment of the present disclosure; and
Fig. 15 is a diagram of synthesis of an IPv6 of an IPv4 DNS server according to an example embodiment of the present disclosure.

### Detailed Description of the Embodiments

The present disclosure will be described below with reference to the drawings and embodiments in detail. It is important to note that the embodiments in the present disclosure and characteristics in the embodiments may be freely combined under the condition of no conflicts.

The embodiment provides a method for processing an IPv6 address, Fig. 2 is a flowchart of a method for processing an IPv6 address according to an embodiment of the present disclosure, and as shown in Fig. 2, the flow includes the following steps:
Step 202: an IPv4 information option, of which an address field is an IPv4 address, in information options of an IPv6 message is acquired;
Step 204: an IPv6 prefix corresponding to the IPv4 information option is acquired; and
Step 206: an IPv6 address is synthesized according to the IPv4 address in the IPv4 information option and the IPv6 prefix.

By the steps, the IPv6 address is synthesized according to the monitored IPv4 address and the IPv6 prefix, so that various problems appearing when some servers are still deployed in an IPv4 network in an IPv6/IPv4 network interworking process and problems of network configuration regulation inflexibility and complexity in network maintenance when NAT64 services are upgraded or all upgraded to an IPv6 network in a later period are solved, and the effects of automatically synthesizing the IPv6 address by virtue of network equipment, reducing complexity in system maintenance and enhancing convenience for transition from IPv4 to IPv6 are further achieved.

According to different network equipment which synthesizes the IPv6 address, different IPv6 messages may also be adopted for synthesis of the IPv6 address. For example, a DHCPv6 relay-reply message sent by a DHCPv6 server and generated to give a reply to DHCPv6 relay equipment may be adopted; and a DHCPv6 reply message sent by the DHCPv6 server and configured to directly give a reply to client equipment may also be adopted. Specifically, under the previous condition, when the network equipment which synthesizes the IPv6 address is DHCPv6 relay equipment, the IPv6 message may be a DHCPv6 relay-reply message received from the DHCPv6 server by the DHCPv6 relay equipment; and under the latter condition, when the network equipment which synthesizes the IPv6 address is the DHCPv6 server, the IPv6 message is a DHCPv6 message generated by the DHCPv6 server according to an IPv4 address stored by the DHCPv6 server.

Wherein, the IPv4 address may exist in multiple forms, that is, multiple manners may be adopted for the IPv4 information option, of which the address field is the IPv4 address, in the information option of the IPv6 message. For example, at least one of the following manners may be adopted: an IPv6 option in an original DHCPv6 message is multiplexed, wherein the multiplexed IPv6 option contains the IPv4 address; and a DHCPv6 message option is extended, wherein the extended DHCPv6 message option contains the IPv4 address.

In addition, multiple manners may also be adopted to acquire the IPv6 prefix corresponding to the IPv4 information option, and for example, at least one of the following acquisition manners may be adopted: the IPv6 prefix corresponding to the IPv4 information option is acquired from local configuration information of network equipment which synthesizes the IPv6 address; and the IPv6 prefix is acquired from a server which stores the IPv6 prefix.

In an example embodiment, after the IPv6 address is synthesized according to the IPv4 address in the IPv4 information option and the IPv6 prefix, the network equipment which synthesizes the IPv6 address may execute various kinds of operation according to the synthesized IPv6 address. For example, an IPv6 message containing an IPv6 address information option is generated according to the synthesized IPv6 address; and the generated IPv6 message is sent to the client equipment.

The embodiment further provides a device for processing an IPv6 address, which is configured to implement the abovementioned embodiment and example implementation mode, and that what has been described will not be elaborated. For example, term "component", used below, may implement a combination of software and/or hardware with a preset function. Although the device described in the following embodiment is preferably implemented with software, implementation with hardware or a combination of software and hardware is also possible and conceivable.

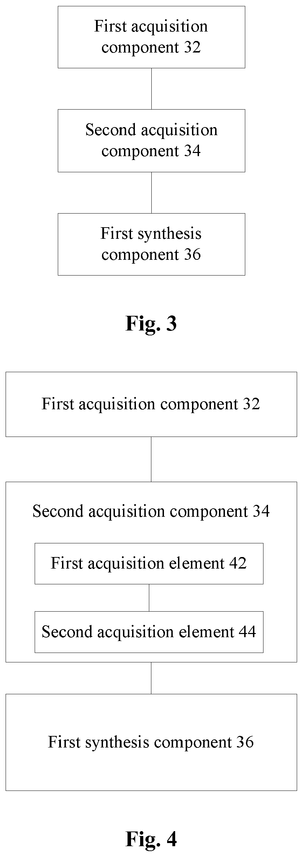

Fig. 3 is a structure block diagram of a device for processing an IPv6 address according to an embodiment of the present disclosure, and as shown in Fig. 3, the device includes a first acquisition component 32, a second acquisition component 34 and a first synthesis component 36. The device will be described below.

The first acquisition component 32 is configured to acquire an IPv4 information option, of which an address field is an IPv4 address, in information options of an IPv6 message; the second acquisition component 34 is connected to the first acquisition component 32, and is configured to acquire an IPv6 prefix corresponding to the IPv4 information option; and the first synthesis component 36 is connected to the acquisition component 34, and is configured to synthesize an IPv6 address according to the IPv4 address in the IPv4 information option and the IPv6 prefix.

Fig. 4 is an example structure block diagram of the acquisition component 34 in the device for processing the IPv6 address according to an embodiment of the present disclosure, and as shown in Fig. 4, the second acquisition component 34 includes at least one of: a first acquisition element 42 and a second acquisition element 44. The second acquisition component 34 will be described below.

The first acquisition element 42 is configured to acquire the IPv6 prefix corresponding to the IPv4 information option from local configuration information of network equipment which synthesizes the IPv6 address; and the second acquisition element 44 is configured to acquire the IPv6 prefix from a server which stores the IPv6 prefix.

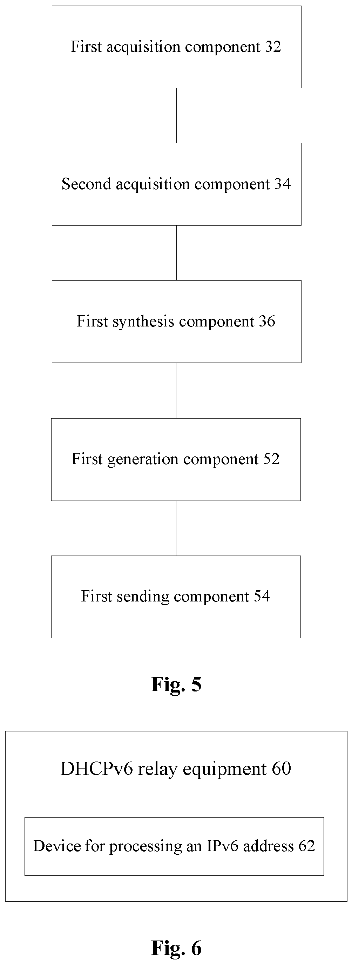

Fig. 5 is an example structure block diagram of the device for processing the IPv6 address according to an embodiment of the present disclosure, and as shown in Fig. 5, the device further, besides all the structures shown in Fig. 3, includes a first generation component 52 and a first sending component 54. The device will be described below.

The first generation component 52 is connected to the synthesis component 36, and is configured to generate an IPv6 message containing an IPv6 address information option according to the synthesized IPv6 address; and the first sending component 54 is connected to the first generation component 52, and is configured to send the generated IPv6 message to the client equipment.

Fig. 6 is a structure block diagram of DHCPv6 relay equipment according to an embodiment of the present disclosure, and as shown in Fig. 6, the DHCPv6 relay equipment 60 includes the device for processing the IPv6 address 62 above mentioned.

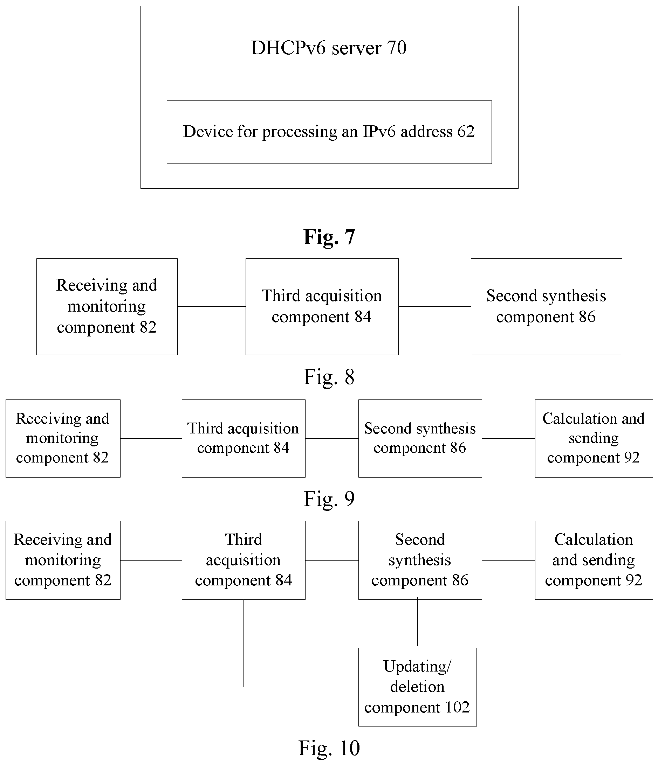

Fig. 7 is a structure block diagram of a DHCPv6 server according to an embodiment of the present disclosure, and as shown in Fig. 7, the DHCPv6 server 70 includes the device for processing the IPv6 address 62 above mentioned.

The embodiment provides a solution for synthesizing an IPv6 address. By the solution, various problems appearing when some servers are still deployed in an IPv4 network in an IPv6/IPv4 network interworking process are solved; in addition, network configurations are reduced; and moreover, when NAT64 services are upgraded or all upgraded to an IPv6 network in a later period, the network configurations are flexibly regulated, complexity in network maintenance is reduced, and easiness for maintenance is ensured.

The method for synthesizing the IPv6 address includes that: intermediate equipment receives a DHCPv6 relay-reply message from DHCPv6 server equipment, and monitors a network configuration information option, of which an address field is an IPv4 address, in network information options therein; the intermediate equipment acquires a synthesis IPv6 prefix corresponding to each IPv4 network configuration information option; and the intermediate equipment synthesizes an IPv6 address according to the IPv4 address in the network configuration information option and the acquired synthesis IPv6 prefix corresponding to each network configuration information option.

In an example embodiment, the intermediate equipment may update a message by virtue of the synthesized IPv6 addresses, generate a corresponding IPv6 address network configuration information option for each network configuration information option of which the address field is the IPv4 address in the option, recalculate information such as a length of a message and forward a DHCPv6 reply message to client equipment.

Wherein, the network configuration information option, containing the IPv4 address, from a DHCPv6 server may multiplex a corresponding DHCPv6 IPv6 network configuration information option, and a DHCPv6 IPv4 network server option may also be added; when the corresponding DHCPv6 IPv6 network configuration information option is multiplexed, the IPv4 address of the IPv4 network server is contained in the IPv6 option; after monitoring the IPv4 address, the intermediate equipment generates the corresponding IPv6 address, updates the IPv6 option by the synthesized IPv6 address, calculates a message and forwards the message to the client equipment; when a DHCPv6 IPv4 network server option is added, it is necessary to define a type field in the added DHCPv6 IPv4 network server option, wherein the type field corresponds to an option-code field used by a corresponding network server option to identify corresponding network server information corresponding to the added DHCPv6 IPv4 network server option ; and after monitoring the added DHCPv6 IPv4 network server option, the intermediate equipment generates a corresponding IPv6 address and a DHCPv6 IPv6 option to replace a monitored option message, calculates a message and forwards the message to the client equipment.

It is important to note that the intermediate equipment may acquire the synthesis IPv6 prefix corresponding to each network configuration information option through local configuration information, and may also acquire the synthesis IPv6 prefix from a centralized server in another manner; and in addition, the synthesis IPv6 prefixes correspond to network configuration information options may be the same or different which depends on a practical network deployment condition.

When receiving a DHCPv6 message of the client equipment as the DHCPv6 server equipment, the intermediate equipment may directly and locally synthesize the IPv6 address of each IPv4 network server and send the synthesized IPv6 address and/or an IPv6 address to the client equipment through a DHCPv6 reply message. In an example embodiment, the client equipment does not perceive an IPv4 network, and the client equipment is not required to perform system and/or network upgrading.

The embodiment further provides a device for synthesizing an IPv6 address, Fig. 8 is a structure block diagram of a device for synthesizing an IPv6 address according to an embodiment of the present disclosure, and as shown in Fig. 8, the device includes a receiving and monitoring component 82 (with a function the same as that of the first acquisition component 32), a third acquisition component 84 (with a function the same as that of the second acquisition component 34) and a second synthesis component 86 (with a function the same as that of the first synthesis component 36). The device will be described below.

The receiving and monitoring component 82 is configured to receive a DHCPv6 relay-reply message from DHCPv6 server equipment, and monitor a network configuration information option, of which an address field is an IPv4 address, in network information options in the DHCPv6 relay-reply message;
the third acquisition component 84 is connected to the receiving and monitoring component 82, and is configured to acquire a synthesis IPv6 prefix corresponding to each network configuration information option; and
the second synthesis component 86 is connected to the third acquisition component 84, and is configured to synthesize an IPv6 address according to the IPv4 address in the network configuration information option and the acquired synthesis IPv6 prefix corresponding to each network configuration information option.

Fig. 9 is a first example structure block diagram of the device for synthesizing the IPv6 address according to an embodiment of the present disclosure, and as shown in Fig. 9, the device further, besides all the component s shown in Fig. 8, includes a calculation and sending component 92 (with functions the same as the functions of the generation component 52 and the sending component 54). The calculation and sending component 92 will be described below.

The calculation and sending component 92 is connected to the second synthesis component 86, and is configured to update a message by the synthesized IPv6 address; generate a corresponding IPv6 address network configuration information option for each network configuration information option of which the address field is the IPv4 address in the options; recalculate information such as a length of the message; and forward a DHCPv6 reply message to client equipment.

In an example embodiment, the receiving and monitoring component 82 is required to monitor a corresponding multiplexed IPv6 network configuration information option of which an address field is an IPv4 address, in a DHCPv6 message; and/or is required to monitor an added DHCPv6 IPv4 network server option, in which a type field corresponding to an option-code field used by a corresponding network server is defined to identify corresponding network server information corresponding to the added DHCPv6 IPv4 network server option.

Fig. 10 is a second example structure block diagram of the device for synthesizing the IPv6 address according to an embodiment of the present disclosure, and as shown in Fig. 10, the device further, besides all the components shown in Fig. 8, includes an updating/deletion component 102. The updating/deletion component 102 will be described below.

The updating/deletion component 102 is connected to the third acquisition component 84 and the second synthesis component 86, and is configured to update/delete a corresponding IPv6 prefix when the synthesis IPv6 prefix acquired by the third acquisition component 84 is updated/deleted.

Wherein, the synthesis IPv6 prefix acquired by the third acquisition component 84 may be locally configured by intermediate equipment, and may also be acquired from a centralized server in another manner; and in addition, the third acquisition component 84 may acquire one or more synthesis IPv6 prefixes corresponding to different IPv4 servers respectively, which specifically depends on a practical network deployment condition.

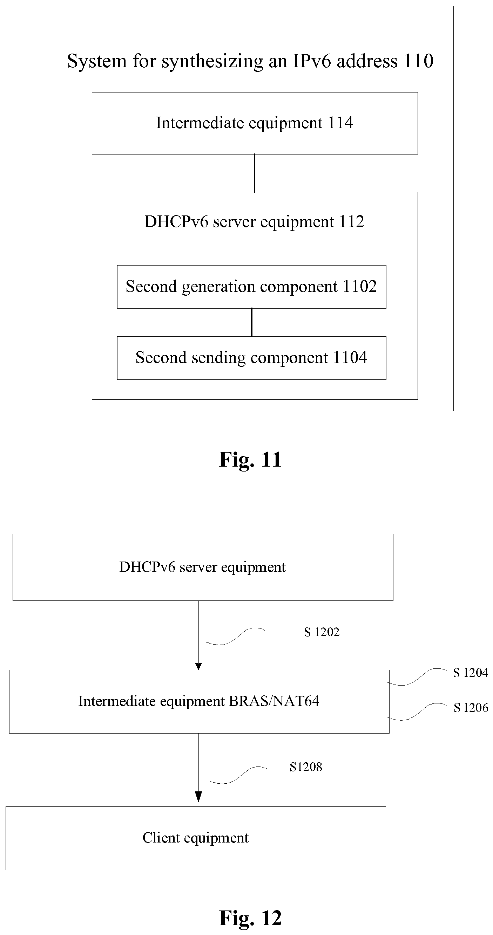

Fig. 11 is a structure block diagram of a system for synthesizing an IPv6 address according to an embodiment of the present disclosure, and as shown in Fig. 11, the system for synthesizing the IPv6 address 110 includes DHCPv6 server equipment 112 and intermediate equipment 114 including any abovementioned device for synthesizing the IPv6 address, wherein the DHCPv6 server equipment 112 includes a second generation component 1102 and a second sending component 1104. The DHCPv6 server equipment 112 will be described below.

The second generation component 1102 is configured to, after receiving a DHCPv6 relay-forwarding message from the intermediate equipment, generate a DHCPv6 relay-reply message containing a network configuration information option of each IPv4 address, wherein the option may multiplex a corresponding DHCPv6 IPv6 network configuration information option, and a DHCPv6 IPv4 network server option may also be added; and the second sending component 1104 is connected to the generation component 1102, and is configured to send the DHCPv6 relay-reply message generated by the second generation component 1102 and containing the network configuration information option of the IPv4 address to the intermediate equipment.

It is important to note that the intermediate equipment 1104 directly and locally synthesizes the IPv6 address of each IPv4 network server and sends the synthesized IPv6 address and/or an IPv6 address to the client equipment through a DHCPv6 reply message when receiving a DHCPv6 message of the client equipment as the DHCPv6 server equipment 1102.

Since the client equipment does not perceive an IPv4 network, the client equipment is not required to perform system and/or network upgrading.

After the above technical solutions are adopted, that is, the intermediate equipment realizes a function of synthesizing an IPv6 address by virtue of an IPv4 address at the same time of automatically configuring a basic IPv6 address. In such a manner, a problem about access of a universal IPv6-only client to an IPv4 network server is solved, so that complexity in maintenance is reduced and convenience for transition to pure IPv6 is enhanced.

The example implementation mode of the present disclosure will be described below with reference to the drawings.

Fig. 12 is a flowchart of a method for synthesizing an IPv6 address according to an embodiment of the present disclosure, and as shown in Fig. 12, the method includes the following steps:
Step 1202: intermediate equipment Broadband Remote Access Server (BRAS)/NAT64 receives a DHCPv6 message sent by DHCPv6 server equipment, and monitors a network configuration information option, of which an address field is IPv4 address, in network information options;
Step 1204: the intermediate equipment acquires a synthesis IPv6 prefix corresponding to each network configuration information option;
Step 1206: the intermediate equipment synthesizes an IPv6 address according to the IPv4 address in the network configuration information option and the acquired synthesis IPv6 prefix corresponding to each network configuration information option; and
Step 1208: the intermediate equipment updates the message by virtue of the synthesized IPv6 address, generates a corresponding IPv6 address network configuration information option for each network configuration information option, of which the address field is the IPv4 address, in the options, recalculates information such as a length of a message, and forwards a DHCPv6 reply message to client equipment.

Wherein, the network configuration information option received from a DHCPv6 server by the intermediate equipment and containing the IPv4 address may be a multiplexed IPv6 network configuration information option in a DHCPv6 message, and the DHCPv6 IPv4 network server option may also be added; when the corresponding IPv6 network configuration information option in the DHCPv6 message is multiplexed, the IPv4 address of the IPv4 network server is contained in the IPv6 network configuration information option; after monitoring the IPv4 address, the intermediate equipment generates a corresponding IPv6 address, updates the IPv6 option by virtue of the synthesized IPv6 address, calculates a message and forwards the message to the client equipment; when the IPv4 network server option in the DHCPv6 message is added, it is necessary to define a type field, corresponding to an option-code field used by a corresponding network server, in the added IPv4 network server option, to identify corresponding network server information corresponding to the added IPv4 network server option; and after monitoring the added IPv4 network server option, the intermediate equipment generates a corresponding IPv6 address and a DHCPv6 IPv6 option to replace a monitored option message, calculates a message and forwards the message to the client equipment.

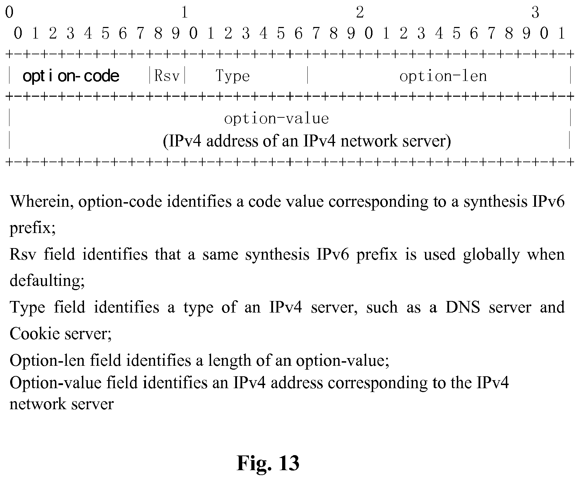

Fig. 13 is a diagram of a message format of a DHCPv6 message containing a new IPv4 network server address option according to an example embodiment of the present disclosure. As shown in Fig. 13, in the message format, option-code field: identifies a code value corresponding to an IPv4 network server address option; Rsv field: is a reserved field; type field: identifies a type of a IPv4 server, such as a DNS server and a Cookie server, wherein different type fields identify different IPv4 server types for synthesis of IPv6 addresses of corresponding IPv4 servers on intermediate equipment; Option-len field: identifies a length of an option-value; Option-value field: identifies an IPv4 address of a corresponding IPv4 network server; and for different IPv4 servers, the DHCPv6 message is required to contain multiple IPv4 network server address options.

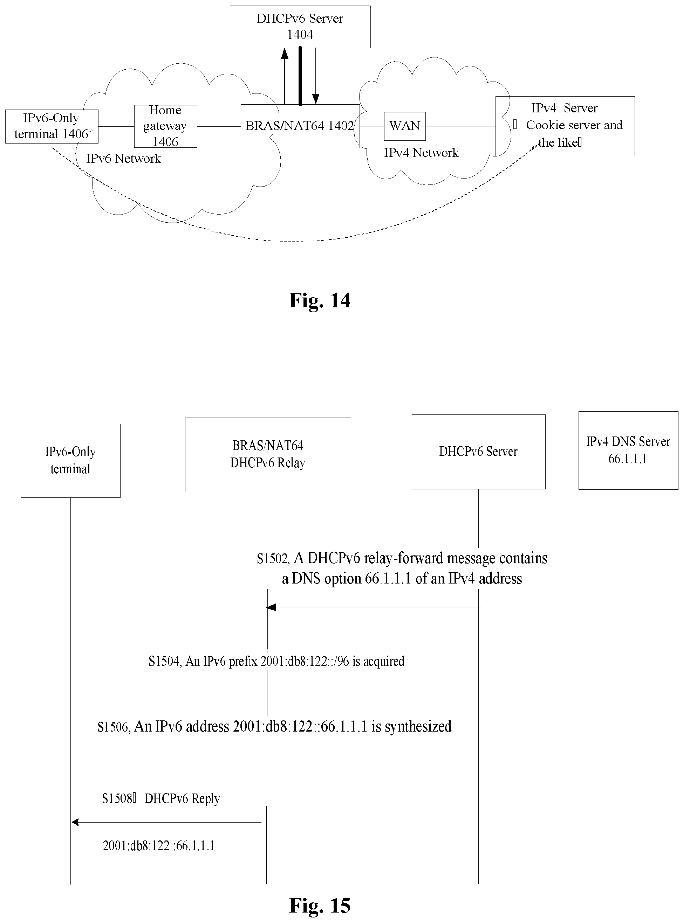

Fig. 14 is a diagram of a system for synthesizing an IPv6 address according to an example embodiment of the present disclosure, and as shown in Fig. 14, the system includes: BRAS/NAT64 equipment 1402, DHCPv6 server equipment 1404 and an IPv6-only terminal/home gateway equipment 1406. The system will be described below.

The BRAS/NAT64 equipment 1402, as DHCPv6 relay intermediate equipment, is configured to receive a DHCPv6 message sent by the DHCPv6 server equipment and monitor a network configuration information option, of which an address field is an IPv4 address, in network information options; also acquire a synthesis IPv6 prefix corresponding to each network configuration information option and synthesize an IPv6 address according to the IPv4 address in the network configuration information option and the acquired synthesis IPv6 prefix corresponding to each network configuration information option; and further update the message by virtue of the synthesized IPv6 address, generate a corresponding IPv6 address network configuration information option for each network configuration information option, of which the address field is the IPv4 address, in the options, recalculate information such as a length of a message, and forward a DHCPv6 reply message to the client equipment;

the DHCPv6 server equipment 1404, as a DHCPv6 server, supports a DHCPv6 option containing the IPv4 address and sends the DHCPv6 option containing the IPv4 address to the BRAS/NAT64 intermediate equipment through a DHCPv6 message; and

the IPv6-only terminal/home gateway equipment 1406, as the DHCPv6 client equipment, is configured to receive the DHCPv6 message and store and/or update parameters required to be stored.

Fig. 15 is a diagram of a flow for synthesizing an IPv6 of an IPv4 DNS server according to an example embodiment of the present disclosure, an IPv6 address of the IPv4 DNS server is contained in a multiplexed IPv6 option of a DHCPv6 message, and as shown in Fig. 15, the diagram may include the following processing steps:
Step 1502: intermediate equipment BRAS/NAT64 receives a DHCPv6 message from DHCPv6 server equipment, and monitors a network configuration information option, of which an address field is an IPv4 address, in network information options, an IPv4 address of the DNS server being monitored to be 66.1.1.1;
Step 1504: the intermediate equipment BRAS/NAT64 acquires a synthesis IPv6 prefix 2001:db8:122::/96 corresponding to a DNS network configuration information option;
Step 1506: the intermediate equipment BRAS/NAT64 synthesizes the IPv6 address 2001 :db8:122:66.1.1.1 according to the IPv4 address 66.1.1.1 in the DNS network configuration information option and the acquired synthesis IPv6 prefix 2001:db8:122::/96 corresponding to the DNS network configuration information option; and
Step 1508: the intermediate equipment BRAS/NAT64 replaces the original DNS network configuration information option of which the address field is the IPv4 address 66.1.1.1 with the synthesized IPv6 address 2001:db8:122::66.1.1.1; recalculates information such as a length of a message; and forwards a DHCPv6 reply message to client equipment.

Wherein, the intermediate equipment BRAS/NAT64 may acquire the synthesis IPv6 prefix corresponding to each network configuration information option through local configuration information, and may also acquire the synthesis IPv6 prefix from a centralized server in another manner.

In an example embodiment, network configuration information options may correspond to the same or different synthesis IPv6 prefixes, which depends on a practical network deployment condition.

In an example embodiment, when receiving a DHCPv6 message of the client equipment as DHCPv6 server equipment, the the intermediate equipment BRAS/NAT64 directly and locally synthesizes the IPv6 address of each IPv4 network server and sends the synthesized IPv6 address or/and an IPv6 address to the client equipment through a DHCPv6 reply message.

In addition, the client equipment does not perceive an IPv4 network, and the client equipment is not required to perform system and/or network upgrading.

The abovementioned embodiment is merely a specific embodiment of the content of the present disclosure, and meanwhile, the technical solution may also be applied to various other application scenarios, such as IPv6-initiated TCP session and Session Initiation Protocol (SIP) flow, which will not be elaborated one by one herein.

Those skilled in the art should know that each component or each step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit module respectively, or multiple components or steps therein may form a single integrated circuit component for implementation. As a consequence, the present disclosure is not limited to any specific hardware and software combination.

The above is merely the example embodiment of the present disclosure and not intended to limit the present disclosure, and for those skilled in the art, the present disclosure may have various modifications and variations. Any modifications, equivalent replacements, improvements and the like within the spirit and principle of the present disclosure shall fall within the scope of protection of the present disclosure.

### Industrial Applicability

As mentioned above, by the embodiment and example implementation mode, various problems appearing when a server is still deployed in an IPv4 network in an IPv6/IPv4 network interworking process and the problem of complexity in network maintenance in the related art are solved, and the effects of automatically synthesizing the IPv6 address by virtue of the network equipment, reducing complexity in system maintenance and enhancing convenience for transition from IPv4 to IPv6 are further achieved.

## Claims

1. A method for processing an Internet Protocol version 6, IPv6, address, comprising:
acquiring an Internet Protocol version 4, IPv4, information option, of which an address field is an IPv4 address, in information options of an IPv6 message;
acquiring an IPv6 prefix corresponding to the IPv4 information option; and
synthesizing an IPv6 address according to the IPv4 address in the IPv4 information option and the IPv6 prefix.

2. The method as claimed in claim 1, wherein the IPv6 message comprises at least one of:
a Dynamic Host Configuration Protocol for IPv6, DHCPv6, relay-reply message sent by a DHCPv6 server and generated to give a reply to DHCPv6 relay equipment; and
a DHCPv6 reply message sent by a DHCPv6 server and configured to directly give a reply to client equipment.

3. The method as claimed in claim 1, wherein the IPv4 information option, of which the address field is the IPv4 address, in the information options of the IPv6 message comprises at least one of:
a multiplexed IPv6 option in a DHCPv6 message, wherein the multiplexed IPv6 option contains the IPv4 address; and
an extended DHCPv6 message option, wherein the extended DHCPv6 message option contains the IPv4 address.

4. The method as claimed in claim 1, wherein acquiring the IPv6 prefix corresponding to the IPv4 information option comprises at least one of:
acquiring the IPv6 prefix corresponding to the IPv4 information option from local configuration information of network equipment which synthesizes the IPv6 address; and
acquiring the IPv6 prefix from a server which stores the IPv6 prefix.

5. The method as claimed in any one of claims 1 to 4, after synthesizing the IPv6 address according to the IPv4 address in the IPv4 information option and the IPv6 prefix, further comprising:
generating an IPv6 message containing an IPv6 address information option according to the synthesized IPv6 address; and
sending the generated IPv6 message to client equipment.

6. A device for processing an Internet Protocol version 6, IPv6, address, comprising:
a first acquisition component, configured to acquire an Internet Protocol version 4, IPv4, information option, of which an address field is an IPv4 address, in information options of an IPv6 message;
a second acquisition component, configured to acquire an IPv6 prefix corresponding to the IPv4 information option; and
a first synthesis component, configured to synthesize an IPv6 address according to the IPv4 address in the IPv4 information option and the IPv6 prefix.

7. The device as claimed in claim 6, wherein the second acquisition component comprises at least one of:
a first acquisition element, configured to acquire the IPv6 prefix corresponding to the IPv4 information option from local configuration information of network equipment which synthesizes the IPv6 address; and
a second acquisition element, configured to acquire the IPv6 prefix from a server which stores the IPv6 prefix.

8. The device as claimed in claim 6 or 7, further comprising:
a first generation component, configured to generate an IPv6 message containing an IPv6 address information option according to the synthesized IPv6 address; and
a first sending component, configured to send the generated IPv6 message to client equipment.

9. Dynamic Host Configuration Protocol for Internet Protocol version 6, DHCPv6, relay equipment, comprising the device as claimed in any one of claims 6 to 8.

10. A Dynamic Host Configuration Protocol for Internet Protocol version 6, DHCPv6, server, comprising the device as claimed in any one of claims 6 to 8.
